# EUROPEAN PATENT APPLICATION

(11) **EP 4 616 947 A1**
(43) Date of publication of application: **17.09.2025**
(21) Application number: 24163964.0
(22) Date of filing: 15.03.2024
(51) Int. Cl.: B01J 35/56, B01J 37/02, B05C 7/04, B05C 11/10, B05D 7/22, F01N 3/28

(54) **APPARATUS AND METHODS RELATING TO COATING SUBSTRATES**

(71) Applicant: Johnson Matthey Public Limited Company, London EC2V 7AD (GB)
(72) Inventor: THOMSON, Craig, Royston, SG8 5HE (GB)
(74) Representative: Johnson Matthey Plc

(57) **Abstract**

Apparatus (1) for applying a pressure reduction to a surface of a substrate (2) being coated with a washcoat, the apparatus comprising an outer conduit (3) and an inner conduit (4) arranged within the outer conduit (3).

The inner conduit (4) comprising an inlet (5) at an upper end that is configured to be placed in fluid communication with the surface of the substrate (2) and an outlet (7) at a lower end that is in fluid communication with an interior (8) of the outer conduit (3).

The outer conduit (3) comprising a sump (9) for collecting excess washcoat that is discharged in use from the surface of the substrate (2) and a gas outlet (10) configured to be connectable to a vacuum generator.

The sump (9) being arranged at a bottom of the outer conduit (3) below a level of the outlet (7) of the inner conduit (4), the sump (9) comprising a sump outlet (11) for discharging the excess washcoat from the apparatus (1).

The gas outlet (10) being arranged above the level of the outlet (7) of the inner conduit (4) such that in use a pressure reduction applied at the gas outlet (10) produces a flow of gas through the apparatus (1) that passes downwardly through the inner conduit (4), through the outlet (7) of the inner conduit (4) into the outer conduit (3) and then upwardly in between the inner conduit (4) and the outer conduit (3) to the gas outlet (10).

## Description

### Field of the disclosure

The disclosure relates to apparatus for applying a pressure reduction to a surface of a substrate being coated with a washcoat, substrate coating apparatus, and methods of coating a substrate with a washcoat.

### Background

Flow-through substrates are a form of emission control device. One of the principal uses of such devices is for the treatment of exhaust gases produced by an internal combustion engine, particularly a vehicular internal combustion engine. These substrates contain a plurality of channels that bring the exhaust gas into contact with a coating on the channel walls within the substrate. This coating may trap, oxidize and/or reduce constituents of the exhaust gas. Flow-through substrates are made of one of two broad classes of materials: ceramic and metal. Ceramic substrates are most common with wide usages in a variety of vehicles such as cars and trucks. Metal substrates are generally used in special environments, such as in cars, trucks and motorcycles.

The substrate may be provided with a coating, also known as a washcoat, which preferably comprises a catalyst. The coating may be applied to the substrate as a washcoat that is passed through the passages of the substrate and becomes deposited on, an attached to, the walls of the passage.

One method for applying a washcoat to a substrate involves applying a washcoat to a first face of the substrate (e.g. an upper face). At least a partial vacuum is applied to a second face of the substrate (e.g. a lower face) which produces or assists in the movement of the washcoat through the channels in the substrate. After coating, the substrate can be dried and calcined.

If a substrate having a single zone is desired, a substrate can be coated with a single dose of a washcoat in a single step with the substrate remaining in a single orientation. When a substrate requires either a single zone, or two zones in series, a coating can be applied to the first face to coat a portion, but not all, of the length of the substrate. The partially coated substrate can then be inverted so that the second face is uppermost and a washcoat can then be applied to the second face in order to coat the portion of the substrate that was uncoated by the first dose. However, such a two dose coating strategy may be impractical where the substrate has a relatively short longitudinal length.

To provide the best performance of the substrate, it may be beneficial to ensure that the substrate is fully coated so that the surface area of the coated substrate is maximized.

Washcoats may be valuable and can represent a significant portion of the component cost of a substrate since they typically contain platinum group metals such as platinum, palladium and rhodium. Consequently, it is beneficial to prevent wastage of washcoat during the coating process.

### Summary of the disclosure

In one aspect of this disclosure, there is provided apparatus for applying a pressure reduction to a surface of a substrate being coated with a washcoat, the apparatus comprising an outer conduit and an inner conduit arranged within the outer conduit;
the inner conduit comprising an inlet at an upper end that is configured to be placed in fluid communication with the surface of the substrate and an outlet at a lower end that is in fluid communication with an interior of the outer conduit;
the outer conduit comprising a sump for collecting excess washcoat that is discharged in use from the surface of the substrate and a gas outlet configured to be connectable to a vacuum generator;
the sump being arranged at a bottom of the outer conduit below a level of the outlet of the inner conduit, the sump comprising a sump outlet for discharging the excess washcoat from the apparatus;
the gas outlet being arranged above the level of the outlet of the inner conduit such that in use a pressure reduction applied at the gas outlet produces a flow of gas through the apparatus that passes downwardly through the inner conduit, through the outlet of the inner conduit into the outer conduit and then upwardly in between the inner conduit and the outer conduit to the gas outlet.

Beneficially, the apparatus may prevent, or at least reduce, wastage of washcoat by providing for the controlled recovery or the excess washcoat. The apparatus provides particular benefit when used during coating of substrates having a relatively short length, since the apparatus may enable a full-length coating of the substrate to be applied in a single dose without wastage of washcoat. For example, the quantity of washcoat of the single dose can be set at a sufficient level to ensure coating of the full length of the substrate with some pull-though of excess washcoat to be expected. The excess washcoat can be recovered from the sump preventing or at least reducing wastage. Such an approach removes the need to invert a substrate and apply doses from both ends to achieve full-length coats of the washcoat.

In some examples the inner conduit may be an inner cone. The inner cone may be configured to funnel excess washcoat that is discharged in use from the surface of the substrate towards and through the outlet of the inner cone. Beneficially, the use of an inner cone may better direct the excess washcoat towards the sump allowing for easier collection of the excess washcoat.

In some examples the outer conduit may be an outer cone.

The outer conduit and the inner conduit may be coaxially arranged.

In another aspect of this disclosure, there is provided a substrate coating apparatus comprising:
a source of washcoat;
a reservoir for holding a quantity of washcoat received from the source, the reservoir configured such that the washcoat contacts an upper surface of a substrate received in use in the substrate coating apparatus; and
the apparatus of the aspect described above, wherein the inlet at the upper end of the apparatus is in fluid communication with a lower surface of the substrate in use.

The substrate coating apparatus may provide the same benefits as described in relation to the apparatus of the above aspect.

The apparatus may further comprise a sump valve connected to the sump outlet for controlling discharge of the excess washcoat from the sump. Use of a sump valve beneficially permits for controlled emptying of the excess washcoat from the sump.

The apparatus may further comprise a recirculation pump for pumping excess washcoat from the sump. Beneficially, use of a recirculation pump may enable automatic or semi-automatic emptying of the excess washcoat from the sump.

There may be provided a recirculation circuit for the excess washcoat. The recirculation circuit may comprise a first path for returning the excess washcoat to the source. In some examples the recirculation circuit may comprise, additionally or alternatively to the first path, a second path for conveying the excess washcoat to a recovery location. Beneficially, providing for recirculation of the excess washcoat to either or both of the source or a recovery location may enable re-use and/or controlled disposal and/or recovery of the excess washcoat. For example, washcoat returned to the source may be used to coat a substrate in a subsequent operation. For example, washcoat returned to the recovery location may be stored for later use or re-conditioned for later use. Alternatively, economically valuable components of the washcoat, e.g. platinum group metals (PGM), returned to the recovery location may be recovered.

A recirculation valve for controlling flow of the excess washcoat between the first path and the second path may be provided. Beneficially, use of a recirculation valve may enable automatic or semi-automatic control of the recirculation circuit.

The substrate coating apparatus may further comprise a vacuum generator connected to the gas outlet. The vacuum generator may comprise, for example, a vacuum generator that operates on the venturi principle, a vacuum pump - optionally a rotary vane pump or a liquid ring vacuum pump - or a regenerative blower.

The substrate coating apparatus may further comprise an upper substrate seal for sealingly engaging an upper end of a substrate received in use in the substrate coating apparatus, and/or a lower substrate seal for sealingly engaging a lower end of a substrate received in use in the substrate coating apparatus.

The upper substrate seal may provide a fluid seal between the reservoir and the substrate. The lower substrate seal may provide a fluid seal between the inner conduit and/or outer conduit and the substrate.

The substrate coating apparatus may further comprise a plurality of support bars configured to support a substrate received in use in the substrate coating apparatus.

The substrate coating apparatus may further comprise a washcoat showerhead for discharging the washcoat into the reservoir.

The substrate coating apparatus may further comprise a doser for dosing a quantity of washcoat into the reservoir.

In another aspect of this disclosure, there is provided a method of coating a substrate with a washcoat, the method comprising the steps of:
- arranging the substrate in a substrate coating apparatus such that an upper surface of the substrate is in fluid communication with a reservoir and a lower surface of the substrate is in fluid communication with an apparatus of the above aspect;
- dosing a quantity of washcoat from a source of washcoat into the reservoir;
- applying a pressure reduction to the lower surface of the substrate using the apparatus to produce a flow of gas through the apparatus that passes downwardly through the inner conduit, through the outlet of the inner conduit into the outer conduit and then upwardly in between the inner conduit and the outer conduit to the gas outlet;
- applying the pressure reduction to the lower surface also drawing the washcoat from the reservoir into the substrate such that excess washcoat is discharged from the lower surface of the substrate;
- collecting the excess washcoat in the sump of the outer conduit; and
- discharging the excess washcoat from the sump outlet of the apparatus.

The method may provide the same benefits as described in relation to the apparatus and the substrate coating apparatus of the above aspects.

The method may further comprise the step of recirculating the excess washcoat to the source and/or a recovery location.

The method may be used, for example, with a substrate that comprises a flow-through substrate. In some examples the substrate has a longitudinal length, from upper surface to lower surface, of less than 5 cm, optionally less than 2.5 cm, optionally less than 1 cm.

The substrate can be a ceramic substrate or a metallic substrate. The ceramic substrate may be made of any suitable refractory material, e.g., alumina, silica, titania, ceria, zirconia, magnesia, zeolites, silicon nitride, silicon carbide, zirconium silicates, magnesium silicates, aluminosilicates, metalloaluminosilicates (such as cordierite and spudomene), or a mixture or mixed oxide of any two or more thereof.

The metallic substrates may be made of any suitable metal, and in particular heat-resistant metals and metal alloys such as titanium and stainless steel as well as ferritic alloys containing iron, nickel, chromium, and/or aluminum in addition to other trace metals.

The substrate is preferably a flow-through substrate, e.g., a flow-through monolith having a honeycomb structure with many small, parallel thin-walled channels running axially through the substrate and extending throughout from an inlet or an outlet of the substrate. The channel cross-section of the substrate may be any shape, but is preferably square, sinusoidal, triangular, rectangular, hexagonal, trapezoidal, circular, or oval. The flow-through substrate may have porous channel walls which allows catalyst coatings to penetrate into the substrate walls. For certain applications, the flow-through monolith substrate has a cell density of about 600 to 800 cells per square inch, and/or an average internal wall thickness of about 0.18-0.35 mm, or about 0.20-0.25 mm. For certain other applications, the flow-through monolith substrate has a low cell density of about 150-600 cells per square inch, or about 200-400 cells per square inch. In some examples the flow-through monolith substrate may have a length of less than 5 cm, optionally less than 2.5 cm, optionally less than 1 cm.

The substrate can be a filter substrate. The filter substrate is preferably a wall-flow monolith filter substrate. The channels of a wall-flow filter are alternately blocked, which allow the exhaust gas stream to enter a channel from the inlet, then flow through the channel walls, and exit the filter from a different channel leading to the outlet.

The washcoat can be a composition that coats on and/or within the channel walls. The washcoat generally comprises a catalyst composition. The catalyst composition can be a diesel oxidation catalyst (DOC), a three-way catalyst (TWC), a NOₓ absorber, a selective reduction catalyst (SCR), or a hydrocarbon trap, for example.

When the catalyst composition is DOC catalyst, the washcoat generally comprises one or more platinum group metals (PGM). Preferably the PGMs are present in a total amount such that the final coating contains at least 1 g/ft³. In addition to the PGM, the washcoat may comprises a support material. Suitable support materials include silica, alumina, ceria, ceria-zirconia and the like. Preferably the support material comprises alumina. One or more support materials may be present. The support material such as alumina can be doped with a dopant. The dopant can be selected from the group consisting of La, Sr, Si, Ba, Y, Pr, Nd, Ce, and mixtures thereof. Preferably, the dopant is La, Ba, or Ce. Most preferably, the dopant is La. The dopant content in the inorganic oxide support can be from 1 to 30 wt%.

When the catalyst composition is TWC catalyst, the catalyst comprises one or more platinum group metals (PGM), a support material, and an oxygen storage capacity (OSC) material. Suitable OSC material may comprises a mixed oxide of cerium, zirconium; a mixed oxide of cerium, zirconium, and aluminium; a mixed oxide of cerium, zirconium, and neodymium; or a mixed oxide of cerium, zirconium and praseodymium. The term "mixed oxide" as used herein generally refers to a mixture of oxides in a single phase, as is conventionally known in the art.

When the catalyst composition is SCR catalyst, the catalyst generally comprises an oxide of a base metal, a molecular sieve, a metal-exchanged molecular sieve, or a mixture thereof. The base metal can be selected from the group consisting of cerium (Ce), chromium (Cr), cobalt (Co), copper (Cu), iron (Fe), manganese (Mn), molybdenum (Mo), nickel (Ni), tungsten (W), vanadium (V), and mixtures thereof. SCR catalysts consisting of vanadium supported on a refractory metal oxide such as alumina, silica, zirconia, titania, ceria and combinations thereof are well known and widely used commercially in mobile applications. The SCR catalyst may comprise vanadium and cerium.

The SCR catalyst can comprise a molecular sieve or a metal-exchanged molecular sieve. As is used herein "molecular sieve" is understood to mean a metastable material containing tiny pores of a precise and uniform size that may be used as an adsorbent for gases or liquids. The molecular sieve can be a zeolitic molecular sieve, a non-zeolitic molecular sieve, or a mixture thereof.

A zeolitic molecular sieve is a microporous aluminosilicate having any one of the framework structures listed in the Database of Zeolite Structures published by the International Zeolite Association (IZA). The framework structures include, but are not limited to those of the CHA, BEA, FAU, LTA, MFI, and MOR types. Non-limiting examples of zeolites having these structures include chabazite, faujasite, zeolite Y, ultrastable zeolite Y, beta zeolite, mordenite, silicalite, zeolite X, and ZSM-5. Aluminosilicate zeolites can have a silica-to-alumina molar ratio (SAR, defined as SiO₂/Al₂O₃) from 5 to 200, from 10 to 180, or from about 20 to 150.

As used herein, the term "non-zeolitic molecular sieve" refers to corner sharing tetrahedral frameworks where at least a portion of the tetrahedral sites are occupied by an element other than silicon or aluminum. Specific non-limiting examples of non-zeolitic molecular sieves include silicoaluminophosphates such as SAPO-34, SAPO-37 and SAPO-44. The silicoaluminophosphates can have framework structures that contain framework elements that are found in zeolites, such as BEA, CHA, FAU, LTA, MFI, MOR and other types.

In this specification the term "controller" may refer to a function that may comprise hardware and/or software. The controller may comprise a control unit or may be a computer program running on a dedicated or shared computing resource. The controller may comprise a single unit or may be composed of a plurality of sub-units that are operatively connected. The controller may be located on one processing resource or may be distributed across spatially separate processing resources. The controller may comprise a microcontroller, one or more processors (such as one or more microprocessors), memory, configurable logic, firmware, etc.

### Brief description of the drawings

Aspects and embodiments of the present disclosure will now be described, by way of example only, with reference to the accompanying drawings, in which:
Figure 1 is a schematic illustration of an apparatus for applying a pressure reduction to a surface of a substrate according to the present disclosure; and
Figure 2 is a schematic illustration of a substrate coating apparatus incorporating the apparatus of Figure 1.

### Detailed description

The skilled reader will recognise that one or more features of one aspect or embodiment of the present disclosure may be combined with one or more features of any other aspect or embodiment of the present disclosure unless the immediate context teaches otherwise.

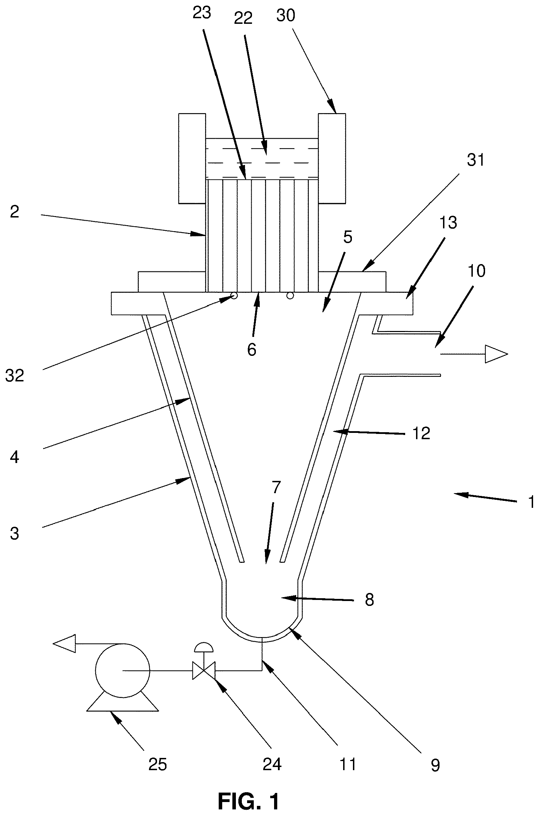

Figure 1 shows an apparatus 1 for applying a pressure reduction to a surface of a substrate 2 in accordance with the present disclosure. The apparatus 1 comprises an outer conduit 3 and an inner conduit 4 arranged within the outer conduit 3.

The inner conduit 4 comprises an inlet 5 at an upper end that is configured to be placed in fluid communication with the surface, for example the lower surface 6, of the substrate 2. An outlet 7 is provided at a lower end of the inner conduit 4 that is in fluid communication with an interior 8 of the outer conduit 3.

The outer conduit 3 comprises a sump 9 for collecting excess washcoat that is discharged in use from the surface, for example the lower surface 6, of the substrate 2. A gas outlet 10 is also provided. The gas outlet 10 is configured to be connectable to a vacuum generator. The gas outlet 10 is arranged above the level of the outlet 7 of the inner conduit 4.

The sump 9 is arranged at a bottom of the outer conduit 3 below a level of the outlet 7 of the inner conduit 4 . The sump 9 comprises a sump outlet 11 for discharging the excess washcoat from the apparatus 1.

The inner conduit 4 may be an inner cone. For example, the inner conduit 4 or at least a portion of the inner conduit 4, may narrow in width from an upper end of the inner conduit 4 that may be proximate the substrate 2 towards the outlet 7 at the lower end that may be distal the substrate 2. The inner conduit 4 or at least a portion of the inner conduit 4, may have a frustum or frustum-like shape. The frustum or frustum-like shape may be conical or pyramidal in form or have another suitable shaping.

The inner conduit 4, for example the inner cone, may be configured to funnel excess washcoat that is discharged in use from the surface, for example the lower surface 6, of the substrate 2 towards and through the outlet 7 of the inner conduit 4.

The outer conduit 3 may be an outer cone. For example, the outer conduit 3 or at least a portion of the outer conduit 3, may narrow in width from an upper end of the outer conduit 3 that may be proximate the substrate 2 towards a lower end of the outer conduit 3 that may be distal the substrate 2. The outer conduit 3 or at least a portion of the outer conduit 3, may have a frustum or frustum-like shape. The frustum or frustum-like shape may be conical or pyramidal in form or have another suitable shaping.

The sump 9 may be located at the lower, distal end of the outer conduit 3 and may close off the distal end of the outer conduit 3.

The outer conduit 3 and the inner conduit 4 may be coaxially arranged. For example, the inner conduit 4 may be arranged within a portion of the outer conduit 3 as shown by way of example in Figure 1. The wall or walls of the inner conduit 4 may be parallel to the wall or walls of the outer conduit 3.

An intermediate space 12 may be defined between the inner conduit 4 and the outer conduit 2 where they overlap. The intermediate space 12 may extend around the circumference of the apparatus 1 to form an annular intermediate space. Alternatively, the intermediate space may comprise one or more channels running between the inner conduit 4 and the outer conduit 3.

The inner conduit 4 and the outer conduit 3 may be mounted, joined, connected or integrated together at their upper ends. For example an annular flange 13 may be provided to join the inner conduit 4 and outer conduit 3 together. The annular flange 13 may close off an upper end of the intermediate space 12. The annular flange 13 may form a part of the inner conduit 4 or the outer conduit 3. Alternatively, the annular flange may initially be a separate component.

Additional connections may be formed between the inner conduit 4 and the outer conduit 3 as required. For example, one or more struts may be provided extending between a wall of the inner conduit 4 and a wall of the outer conduit 3. The struts may be configured so as not to unduly impede flow of gas along the intermediate space 12. The struts may function to strengthen the apparatus 1 and maintain relative alignment of the inner conduit 4 and the outer conduit 3.

In use, a pressure reduction applied at the gas outlet 10 (for example by a vacuum generator) produces a flow of gas through the apparatus 1 that passes downwardly through the inner conduit 4, through the outlet 7 of the inner conduit 4 into the outer conduit 3 and then upwardly in between the inner conduit 4 and the outer conduit 3 to the gas outlet 10. For example, the pressure reduction may generate an upward flow of gas within the intermediate space 12 from the interior 8 near or within the sump 9 towards the gas outlet 10.

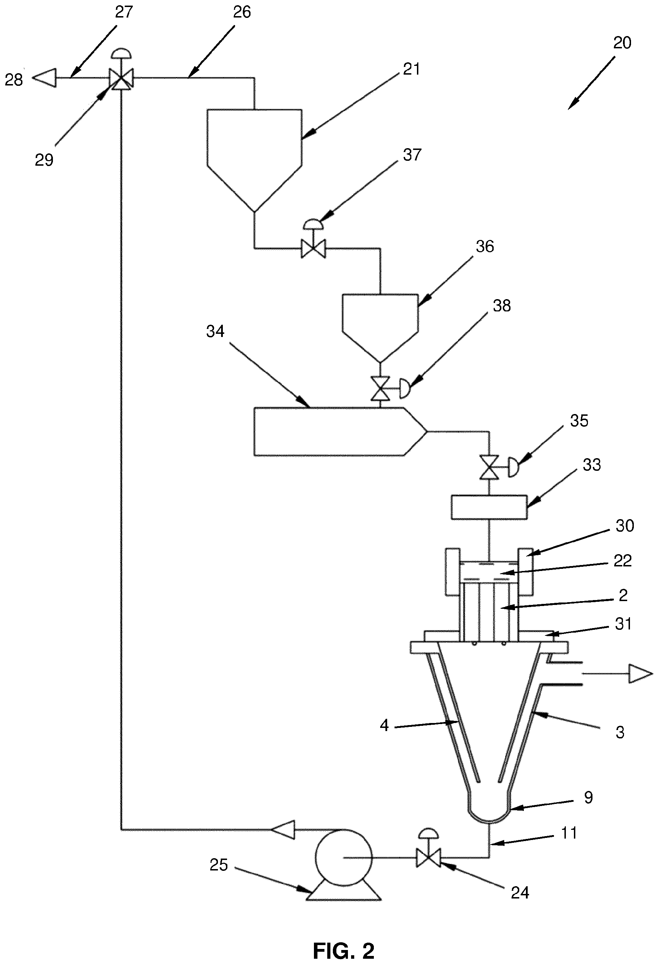

The apparatus 1 may be incorporated, for example, within a substrate coating apparatus 20 as shown schematically in Figure 2. The substrate coating apparatus 20 may comprise a source 21 of washcoat and a reservoir 22 for holding a quantity of washcoat received from the source 21. The reservoir 22 is configured such that the washcoat contacts an upper surface 23 of the substrate 2 received in the substrate coating apparatus 20. The apparatus 1 is configured such that the inlet 5 at the upper end of the inner conduit 4 is in fluid communication with the lower surface 6 of the substrate 2.

The substrate coating apparatus 20 may comprise a sump valve 24 connected to the sump outlet 9 for controlling discharge of excess washcoat from the sump 9. A recirculation pump 25 may be provided for pumping excess washcoat from the sump 9.

The sump 9 may be provided with a level sensor to detect a level of excess washcoat within the sump 9 and a controller may be configured to discharge excess washcoat from the sump when the level reaches a predetermined point.

The substrate coating apparatus 20 may comprise a recirculation circuit for the excess washcoat. The recirculation circuit may comprise a first path 26 for returning the excess washcoat to the source 21 and/or a second path 27 for conveying the excess washcoat to a recovery location 28.

The substrate coating apparatus 20 may comprise a recirculation valve 29 for controlling flow of the excess washcoat between the first path 26 and the second path 27.

The substrate coating apparatus 20 may comprise a vacuum generator connected to the gas outlet 10. The vacuum generator may, for example, comprise a vacuum generator that operates on the venturi principle, a vacuum pump - optionally a rotary vane pump or a liquid ring vacuum pump - or a regenerative blower.

The substrate coating apparatus 20 may further comprise an upper substrate seal 30 for sealingly engaging an upper end of the substrate 2 and/or a lower substrate seal 31 for sealingly engaging a lower end of the substrate 2. The upper substrate seal 30 may provide a fluid seal between the reservoir 22 and the substrate 2. The lower substrate seal 31 may provide a fluid seal between the inner conduit 4 and/or outer conduit 3 and the substrate 2.

A plurality of support bars 32 may be provided that may be configured to support the substrate 2, for example the lower surface 6, when received in the substrate coating apparatus 20.

The substrate coating apparatus 20 may further comprise a washcoat showerhead 33 for discharging the washcoat into the reservoir 22. A doser 34 for dosing a quantity of washcoat into the reservoir 22 may be provided. The doser 34 may comprise, for example, a piston pump arrangement wherein movement of a piston within a barrel in a first direction may charge the piston pump with washcoat derived from the source 21 and movement of the piston within the barrel in a second direction discharges a controlled volume of washcoat towards the substrate 2, for example through the washcoat showerhead 33. A control valve 35 may be located intermediate the doser 34 and the washcoat showerhead 33 which can be opened to permit flow of washcoat to the washcoat showerhead 33 and closed to prevent flow.

The source 21 of washcoat may be a suitable container, for example a tank. The source 21 may feed an intermediate hopper 36 with a flow of washcoat to the intermediate hopper 36 being controlled, for example, by a tank valve 37. Onward flow of the washcoat from the intermediate hopper 36 to the doser 34 may be controlled by a hopper valve 38.

One or more controllers may be provided for controlling operation of the sump valve 24, recirculation valve 29, control valve 35, tank valve 37 and the hopper valve 38 as well as operation of the doser 34, the vacuum generator and the recirculation pump 25.

In use the substrate 2 may be coated with washcoat, using a method comprising the following steps.

The substrate 2 is arranged in the substrate coating apparatus 20 such that the upper surface 23 of the substrate 2 is in fluid communication with the reservoir 22 and the lower surface 6 of the substrate 2 is in fluid communication with the apparatus 1 as described above.

A quantity of washcoat is then dosed from the source 21 of washcoat into the reservoir 2. As noted above the washcoat may, for example, flow from a tank via the intermediate hopper and via a dosing apparatus, for example the doser 35 and through the washcoat showerhead 33.

A pressure reduction is then applied to the lower surface 6 of the substrate 2 using the apparatus 1 to produce a flow of gas through the apparatus 1 that passes downwardly through the inner conduit 4, through the outlet 7 of the inner conduit 4 into the outer conduit 3 and then upwardly in between the inner conduit 4 and the outer conduit 3 to the gas outlet 10. For example, the pressure reduction may generate an upward flow of gas within the intermediate space 12 from the interior 8 near or within the sump 9 towards the gas outlet 10. For example, the pressure reduction may be generated by using a vacuum generator connected to the gas outlet 10.

The pressure reduction applied to the lower surface 6 also draws the washcoat from the reservoir 22 into the substrate 2 such that excess washcoat is discharged from the lower surface 6 of the substrate 2.

The excess washcoat is collected in the sump 9 of the outer conduit 3, for example after being funnelled into the sump 9 by the inner conduit 4. The excess washcoat is then discharged from the sump outlet 9 of the apparatus 1. Discharge of the excess washcoat from the sump 9 may be continuous, for example with the recirculation valve 24 being open and the recirculation pump 25 being on during operation of the vacuum generator. Alternatively, discharge of the excess washcoat from the sump 9 may be intermittent, for example with the recirculation valve 24 being opened and the recirculation pump 25 being turned on after one or more coating operations or when the sump 9 is filled to a predetermined level.

The excess washcoat may be recirculated to the source 21 and/or a recovery location 28.

The apparatus 1 may be used to coat a wide variety of substrates 2. It finds particular application for the coating of flow-through substrates.

The apparatus 1 may be used to coat substrates 2 of various longitudinal lengths (the longitudinal length being measured along the axis of the substrate from the upper surface 23 to the lower surface 6). The apparatus 1 and method finds particular application when coating substrates 2 of a relatively short longitudinal length where it may be impractical to coat the substrate 2 from both ends (i.e. with the substrate 2 partially coated from a first end in a first step and then partially coated from a second end in a second step). For example, the apparatus 1 and method finds particular application where the substrate 2 has a longitudinal length of less than 5 cm or less than 2.5 cm or less than 1 cm. The diameter of the substrate 2 may vary. In some examples the diameter is 10 to 15 cm. In one example the substrate 2 has a diameter of 150 mm and a longitudinal length of 10 mm. In another example the substrate 2 has a diameter of 118-120 mm and a longitudinal length of 20 mm. In another example the substrate 2 has a diameter of 144 mm and a longitudinal length of 7 mm. In another example the substrate 2 has a diameter of 103 mm and a longitudinal length of 6 mm.

Such substrates 2 may include, for example, coils, foams and monoliths. The coils, foams and monoliths may be metallic. The coils, foams and monoliths may be intended to form part of a catalyst system, for example, being located upstream of a secondary device such as another substrate that may be, for example, a flow-through substrate bearing a catalyst or a filter substrate. The coils, foams and monoliths may be heated in use as part of the catalyst system.

## Claims

1. Apparatus for applying a pressure reduction to a surface of a substrate being coated with a washcoat, the apparatus comprising an outer conduit and an inner conduit arranged within the outer conduit;
the inner conduit comprising an inlet at an upper end that is configured to be placed in fluid communication with the surface of the substrate and an outlet at a lower end that is in fluid communication with an interior of the outer conduit;
the outer conduit comprising a sump for collecting excess washcoat that is discharged in use from the surface of the substrate and a gas outlet configured to be connectable to a vacuum generator;
the sump being arranged at a bottom of the outer conduit below a level of the outlet of the inner conduit, the sump comprising a sump outlet for discharging the excess washcoat from the apparatus;
the gas outlet being arranged above the level of the outlet of the inner conduit such that in use a pressure reduction applied at the gas outlet produces a flow of gas through the apparatus that passes downwardly through the inner conduit, through the outlet of the inner conduit into the outer conduit and then upwardly in between the inner conduit and the outer conduit to the gas outlet.

2. The apparatus of claim 1, wherein the inner conduit is an inner cone.

3. The apparatus of claim 2, wherein the inner cone is configured to funnel excess washcoat that is discharged in use from the surface of the substrate towards and through the outlet of the inner cone.

4. The apparatus of any preceding claim, wherein the outer conduit is an outer cone.

5. The apparatus of any preceding claim, wherein the outer conduit and the inner conduit are coaxially arranged.

6. A substrate coating apparatus comprising:
a source of washcoat;
a reservoir for holding a quantity of washcoat received from the source, the reservoir configured such that the washcoat contacts an upper surface of a substrate received in use in the substrate coating apparatus; and
the apparatus of any preceding claim, wherein the inlet at the upper end of the apparatus is in fluid communication with a lower surface of the substrate in use.

7. The substrate coating apparatus of claim 6, further comprising a sump valve connected to the sump outlet for controlling discharge of the excess washcoat from the sump.

8. The substrate coating apparatus of claim 6 or claim 7, further comprising a recirculation pump for pumping excess washcoat from the sump.

9. The substrate coating apparatus of any one of claims 6 to 8, further comprising a recirculation circuit for the excess washcoat, the recirculation circuit comprising a first path for returning the excess washcoat to the source.

10. The substrate coating apparatus of claim 9, wherein the recirculation circuit comprises a second path for conveying the excess washcoat to a recovery location.

11. The substrate coating apparatus of claim 10, further comprising a recirculation valve for controlling flow of the excess washcoat between the first path and the second path.

12. The substrate coating apparatus of any one of claims 6 to 11, further comprising a vacuum generator connected to the gas outlet.

13. The substrate coating apparatus of claim 12, wherein the vacuum generator comprises a vacuum generator that operates on the venturi principle, a vacuum pump - optionally a rotary vane pump or a liquid ring vacuum pump - or a regenerative blower.

14. The substrate coating apparatus of any one of claims 6 to 13, further comprising an upper substrate seal for sealingly engaging an upper end of a substrate received in use in the substrate coating apparatus, and/or a lower substrate seal for sealingly engaging a lower end of a substrate received in use in the substrate coating apparatus.

15. The substrate coating apparatus of claim 14, wherein the upper substrate seal provides a fluid seal between the reservoir and the substrate.

16. The substrate coating apparatus of claim 14 of claim 15, wherein the lower substrate seal provides a fluid seal between the inner conduit and/or outer conduit and the substrate.

17. The substrate coating apparatus of any one of claims 6 to 16, further comprising a plurality of support bars configured to support a substrate received in use in the substrate coating apparatus.

18. The substrate coating apparatus of any one of claims 6 to 17, further comprising a washcoat showerhead for discharging the washcoat into the reservoir.

19. The substrate coating apparatus of any one of claims 6 to 18, further comprising a doser for dosing a quantity of washcoat into the reservoir.

20. A method of coating a substrate with a washcoat, the method comprising the steps of:
- arranging the substrate in a substrate coating apparatus such that an upper surface of the substrate is in fluid communication with a reservoir and a lower surface of the substrate is in fluid communication with an apparatus as claimed in any one of claims 1 to 5;
- dosing a quantity of washcoat from a source of washcoat into the reservoir;
- applying a pressure reduction to the lower surface of the substrate using the apparatus to produce a flow of gas through the apparatus that passes downwardly through the inner conduit, through the outlet of the inner conduit into the outer conduit and then upwardly in between the inner conduit and the outer conduit to the gas outlet;
- applying the pressure reduction to the lower surface also drawing the washcoat from the reservoir into the substrate such that excess washcoat is discharged from the lower surface of the substrate;
- collecting the excess washcoat in the sump of the outer conduit; and
- discharging the excess washcoat from the sump outlet of the apparatus.

21. The method of claim 20, further comprising the step of recirculating the excess washcoat to the source and/or a recovery location.

22. The method of claim 20 or claim 21, wherein the substrate comprises a flow-through substrate.

23. The method of any one of claims 20 to 22, wherein the substrate has a longitudinal length, from upper surface to lower surface, of less than 5 cm, optionally less than 2.5 cm, optionally less than 1 cm.
